# EUROPÄISCHE PATENTANMELDUNG

(11) **EP 0 649 825 A1**
(43) Veröffentlichungstag der Anmeldung: **26.04.1995**
(21) Anmeldenummer: 94114586.4
(22) Anmeldetag: 16.09.1994
(51) Int. Cl.: C05D 9/00, C05G 1/00

(54) **Verfahren zum Verarbeiten von Klärschlamm**

(30) Priorität: 20.10.1993 DE 4335746; 02.05.1994 DE 4415163
(71) Anmelder: Hochwald-Ton-GmbH, D-66620 Nonnweiler (DE)
(72) Erfinder: Sütterlin, Hansdieter, CH-5727 Oberkulm (CH); Grässer, Jürgen, CH-66125 Dudweiler (CH)
(74) Vertreter: Henseler, Daniela, Dr.

(57) **Zusammenfassung**

Die Erfindung betrifft ein Verfahren zum Verarbeiten von Klärschlamm durch Mischen eines teilentwässerten, stabilisierten Klärschlamms mit einem mineralischen Rohstoff. Um Klärschlamm zu einem qualitativ besseren, kompostierbaren Sekundärrohstoff zu verarbeiten ist vorgesehen, daß ein körniger, mineralischer Rohstoff verwendet wird, der einen Tonmineralanteil aufweist und der zusammen mit einem Textur auflockernden Füllstoff und Klärschlamm zu einem zumindest grobhomogenen Gemenge gemischt wird, wobei die Dauer des Mischvorganges derart gewählt ist, daß ein weitgehender Kationenaustausch vom Klärschlamm an die Tonmineralien erfolgt und das erhaltene Gemenge zur Kompostierung einer aeroben Umsetzung überlassen wird.

## Beschreibung

Die Erfindung betrifft ein Verfahren zum Verarbeiten von Klärschlamm durch Mischen eines teilentwässerten, stabilisierten Klärschlamms mit einem mineralischen Rohstoff.

Verfahren zur Verarbeitung von Klärschlamm sind notwendig, damit die bei der Reinigung von Abwasser anfallenden großen Klärschlammengen aus kommunalen und industriellen Kläranlagen nach einer entsprechenden Stabilisierung, insbesondere durch Ausfaulen, als Sekundärrohstoffe einsetzbar sind.

Zur Verwertung der Klärschlämme bietet sich deren Einsatz als Bodenverbesserungsmittel sowie als teilweiser Düngerersatz für mineralische Düngemittel an, da in der Regel eine Vielzahl organischer Substanzen sowie Makro- und Mikronährelemente in Klärschlämmen enthalten sind. Insoweit sind Klärschlämme Wertstoffe bzw. Sekundärrohstoffe, die allerdings mit einer Reihe anorganischer und organischer Schadstoffe, pathologischer Bakterien, Viren, Wurmeiern etc. behaftet sind, so daß die auszubringende Klärschlammenge pro Hektar und Jahr im allgemeinen begrenzt ist. Der Hygienisierungseffekt des Bodens ist vielfach zu schwach bzw. zu langsam. Hygienische Probleme lassen sich vermeiden, wenn der Klärschlamm vor der Auslieferung kompostiert oder pasteurisiert wird. Aber auch kompostierte oder pasteurisierte Klärschlämme sind wegen ihrer Anteile an organischen und anorganischen Schadstoffen nur begrenzt ausbringbar. Es treten deshalb zunehmend Probleme im Zusammenhang mit dem Verbleib der Klärschlämme auf, insbesondere solcher Klärschlämme, die größere Schwermetallmengen enthalten.

Aufgabe der Erfindung ist es daher, ein Verfahren zum Verarbeiten von Klärschlamm durch Mischen eines teilentwässerten, stabilisierten Klärschlamms mit einem mineralischen Rohstoff zu schaffen, das eine Verarbeitung der Klärschlämme zu einem qualitativ besseren, kompostierbaren Sekundärrohstoff erlaubt. Eine weitere Aufgabe besteht darin, eine umweltfreundliche und kostengünstige Verwertung der Klärschlämme zu erreichen.

Diese Aufgaben werden gemäß dem kennzeichnenden Teil des Anspruchs 1 gelöst.

Hierdurch wird ein Verfahren zur Verarbeitung von Klärschlamm geschaffen, das durch ein rein mechanisches Vermengen des Klärschlamms mit einem einen Tonmineralanteil aufweisenden, mineralischen Rohstoff und einem Textur auflockernden Zuschlagstoff die Herstellung eines Klärschlammgemenges mit guten Kompostiereigenschaften erlaubt. Weiterhin gelangt der Tonmineralanteil des mineralischen Rohstoffs mit dem Klärschlamm in einen reaktiven Kationenaustausch, wodurch die Tonmineralien die Schwermetallkationen adsorbieren. Eine spätere Emission derselben, wenn überhaupt, ist folglich nur gering. Adsorbiert werden können ebenso die polaren organischen Schadstoffe. Das gewonnene Gemenge kann deshalb bei einer Ausbringung in Böden die Schwermetallgehalte zurückhalten.

Die Textur des Gemenges wird durch die Zugabe des Zuschlagstoffs wesentlich aufgelockert, wodurch bessere Kompostiereigenschaften erzielt werden. Bei dem Zuschlagstoff handelt es sich vorzugsweise um einen leichten, sperrigen Füllstoff, der die Durchströmbarkeit des Gemenges erhöht, was auch den Verrottungsgrad erhöht. Der Füllstoff ist zudem vorzugsweise erodierbar. Beispiele für den Füllstoff sind feuchtigkeitsregulierende, organische Materialien, wie Holzschnitzel oder Mulch, oder anorganische Zuschlagstoffe, wie zum Beispiel Scherben eines keramischen Altmaterials oder dergleichen. Auch kalzinierter Ton, aus Aschen stammende, getemperte Tonminerale oder ein Grobkornanteil eines körnigen, mineralischen Rohstoffs liefern einen Beitrag zur Lockerung der Textur des Gemenges und können gegebenenfalls gleichzeitig eine aktive Oberfläche für eine Kationenadsorption bieten. Der Zuschlagstoff kann natürlich auch eine Kombination verschiedener vorstehend genannter Füllstoffmaterialen sein.

Darüber hinaus beschleunigt der Zuschlagstoff die Aufbereitung des Klärschlamms, der durch diese Zuschlagstoffe schneller homogenisiert wird und damit Oberfläche für die Kationenadsorption geschaffen wird.

Als körniger mineralischer Rohstoff kann ein herkömmliches Natursteingranulat Verwendung finden, wobei je nachdem, ob dieses Natursteingranulat eine Kationenadsorptionsfähigkeit zeigt oder nicht, die Art des tonmineralhaltigen Anteils wählbar ist. Alternativ kann der mineralische Rohstoff auch hauptsächlich von einem tonmineralhaltigen Rohstoff gebildet werden. Aus Kostengründen bevorzugt sind die tonsteinartigen Zweischichttonminerale, insbesondere mit den Hauptbestandteilen Kaolinit und/oder Halloysit und/oder Dickit. Durch den Einsatz von tonsteinartigen Zweischichttonmineralien mit einem zumindest niedrigen Diagenesegrad, der zu Gitterfehlstellen geführt hat, wird erreicht, daß die Zweischichttonmineralien ein ausreichendes Adsorptionsvermögen gegenüber Klärschlamm zeigen, damit der Klärschlamm sein Gefahrenpotential verliert.

Die Körnung des mineralischen Rohstoffs ist wählbar, wobei die Korngrößen vorzugsweise hauptsächlich zwischen 1 µm und 10 mm liegen, um die Bildung eines krümeligen Gemenges zu erreichen. Ein Feinkornanteil, insbesondere eines tonmineralhaltigen Rohstoffs, begünstigt die Oberflächenaktivität. Ein Grobkornanteil über 10 mm begünstigt die Textur.

Für einen hinreichenden Gesamtflüssigkeitsgehalt des Gemenges in bezug auf den Festsubstanzgehalt werden nur teilentwässerte Klärschlämme eingesetzt, deren Trockengehalt wenigstens 15 Gew.-%, insbesondere 20 bis 30 Gew.-%, beträgt. Eine vorteilhafte Versatzmenge von Klärschlamm und mineralischem Rohstoff ist in Anspruch 10 angegeben.

Zur Hygienisierung des Klärschlamms kann der Klärschlamm vor dem mechanischen Vermengen mit dem mineralischen Rohstoff zumindest kurzzeitig erhitzt werden. Alternativ kann das Mischgut zumindest zeitweilig in dem Mischer erhitzt werden. Die Erhitzung des Mischguts kann über eine direkte oder indirekte Beheizung des Mischers erfolgen, wozu auch ein elektromagnetisches Wechselfeld eingesetzt werden kann. Alternativ kann der Zuschlagstoff in erhitztem Zustand einem Vormischgut aus Klärschlamm und mineralischem Rohstoff zugegeben werden.

Weitere Ausgestaltungen der Erfindung sind der nachfolgenden Beschreibung und den Unteransprüchen zu entnehmen.

Die Erfindung wird nachstehend anhand des in der beigefügten Abbildung dargestellten Ausführungsbeispiels einer Vorrichtung zum Verarbeiten von Klärschlamm näher erläutert.

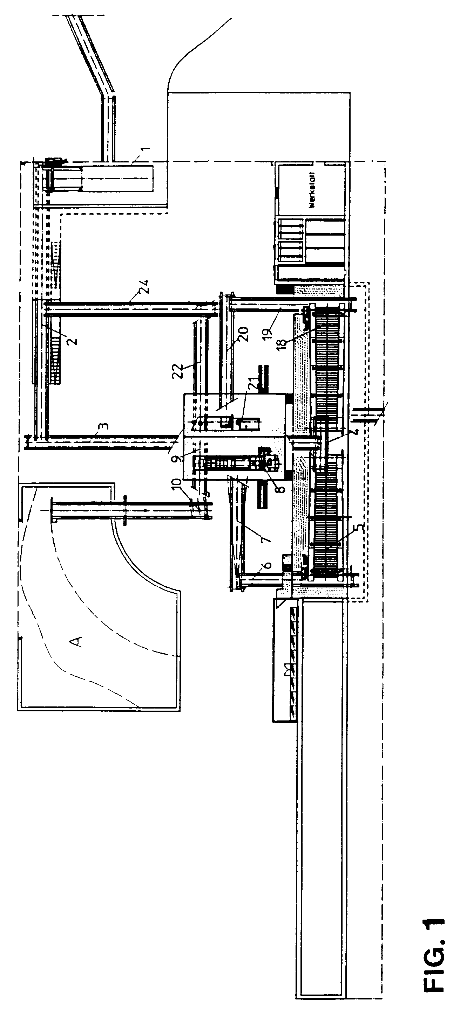

- Fig. 1: zeigt schematisch den Aufbau eines Ausführungsbeispiels einer Vorrichtung zur erfindungsgemäßen Verarbeitung von Klärschlamm.

Fig. 1 zeigt eine Vorrichtung bzw. Anlage zum Verarbeiten von Klärschlamm, die eingangsseitig eine Zerkleinerungsvorrichtung 1 für einen mineralischen Rohstoff aufweist. Diese Zerkleinerungsvorrichtung 1 wird benötigt, wenn der mineralische Rohstoff in Gesteinsform vorliegt oder eine Verkleinerung des maximalen Korns erwünscht ist. Die Einstellung einer breiten Korngrößenfraktion wird hierdurch ermöglicht. Die Zerkleinerungsvorrichtung 1 ist als Prallmühle ausgebildet, deren Durchsatz ebenso wie die Zerkleinerungswirkung groß ist.

Als mineralischer Rohstoff kann ein Naturstein, wie Kalkstein, Sandstein, Tongestein und dergleichen oder eine Zusammenstellung derselben, eingesetzt werden. Werden mineralische Rohstoffe, die selbst keinen Tonmineralanteil aufweisen, verwendet, ist ein Tonmineralanteil zuzumischen. Dieser Tonmineralanteil kann aus einem oder mehreren Zweischicht- oder Dreischichttonmineralien bestehen und ist für eine Kationenadsorptionsfähigkeit des späteren Mischgutes erforderlich. Bekanntlich besitzen Dreischichttonmineralien eine sehr hohe Kationenadsorptionsfähigkeit, so daß deren Beimischung nur in geringen Mengen ausreicht. Beispielsweise ist bei einem Kalkstein oder Sandsteingranulat ein Anteil von weniger als 10 % Bentonit ausreichend.

Bevorzugt wird als körniger, mineralischer Rohstoff ein zu zerkleinernder tonsteinartiger Rohstoff mit dem Hauptanteil Ton aus einem Zweischichttonmineral eingesetzt. Dies sind insbesondere die Tone der Kaolingruppe, wie z.B. Kaolinit, Halloysit und Dickit, oder eine Zusammensetzung verschiedener Tone der Kaolingruppe.

Besonders bevorzugt sind zudem Kaolinittone, die zumindest leicht plastisch sind und/oder einen zumindest niedrigen Diagenesegrad aufweisen, damit das Kationenaustauschvermögen aufgrund von Gitterfehlstellen gegenüber diagenetisch nicht verfestigtem Ton erhöht ist. Die Kaolinittone können Nebenbestandteile aufweisen, zu denen hier im allgemeinen geringe Anteile Glimmer, Illit oder Smectit sowie Anatas, Eisenmineral und Quarz zählen.

Falls in dem eingesetzten Kaolinitton nicht vorhanden, kann gegebenenfalls eine Zumischung eines geringfügigen Anteils (<4 %) des Eisenminerals Siderit (FeCo₃) zum tonmineralhaltigen Rohstoff erfolgen. Eine positive Beeinflussung des Adsorptionsvermögens kann hierdurch möglich sein.

Die Zerkleinerung des vorstehend beschriebenen mineralischen Rohstoffs in der Zerkleinerungsvorrichtung 1 erfolgt mit einer wählbaren Körnung. Die Körnung ist unabhängig von der Art des mineralischen Rohstoffs und kann eine kontinuierliche oder diskontinuierliche Korngrößenverteilung besitzen. Hauptsächlich liegen die Korngrößen zwischen 1 µm und 10 mm. Bevorzugt kann auch ein Grobkornanteil über 10 mm, d.h. bis zu 50 oder 60 mm, vorhanden sein, der als Bestandteil eines Mischguts dessen Durchmischung verbessert und zumindest teilweise einen Textur auflockernden Zuschlagstoff bilden kann. Bevorzugt können auch mindestens 20 % der wählbaren Körnung im Korngrößenbereich zwischen 0,1 und 250 µm liegen. Ein mögliche Korngrößenverteilung für den zerkleinerten mineralischen Rohstoff in Gewichtsprozent (ca.-Werte) ist zum Beispiel:
20 % <2 µ
20 % 2 µ - 250 µ
20 % 250 µm - 2,5 mm
20 % 2,5 mm - 10 mm
20 % 10 mm - 50 mm
Alternativ ist eine Zerkleinerung auf feinere Kornfraktionen, 0,1 - 100 µm, oder mittlere Kornfraktionen, 0,1 µm - 1 mm, geeignet. Derartige Kornfraktionen bedingen im allgemeinen längere Mischzeiten. Der zerkleinerte mineralische, einen Tonmineralanteil aufweisende Rohstoff wird über Fördereinrichtungen 2, 3, 4, beispeilsweise Gummibandtransporteure, einer Dosiervorrichtung 5, wie einem Kastenbeschicker, zugeführt.

Diese Dosiervorrichtung 5 weist einen oder mehrere Füllkästen oder Silos mit Zuteilvorrichtungen für den mineralischen Rohstoff, einen Zuschlagstoff und Klärschlamm auf.

Der Zuschlagstoff dient dazu, einem erfindungsgemäß herzustellenden Gemenge eine Lockertextur zu verleihen. Der Zuschlagstoff ist vorzugsweise ein leichter, sperriger, nicht verdichtender, inerter Füllstoff, und wird beispielsweise von einem leichten, feuchtigkeitsregulierenden, organischen Material, insbesondere Holzschnitzel oder Mulch, gebildet. Der genannte Mulch ist wegen seiner feuchtigkeitsregulierenden Eigenschaften in Verbindung mit dem Klärschlamm geeignet. Als Füllstoff sind weiterhin geeignet alle auflockernden Materialien, wie zum Beispiel Scherben eines keramischen Altmaterials, Flaschenscherben oder dergleichen, oder zumindest teilweise auch kalzinierte oder getemperte Tonmineralien. Weiterhin als Füllstoff geeignet ist auch ein Grobkornanteil des dem Klärschlamm zuzumischenden körnigen, mineralischen Rohstoffs oder eines anderen mineralischen Rohstoffs. Der Gewichtsanteil des Füllstoffs kann bis zu 50 % des mineralischen Rohstoffs ausmachen. Der Zuschlagstoff kann natürlich auch eine Kombination verschiedener vorstehend genannter Füllstoffmaterialien sein.

Für den Füllstoff kann die Dosiervorrichtung 5 einen Füllkasten aufweisen, sofern der Füllstoff dem mineralischen Rohstoff nicht vorab Zugemischt wird. Mittels der Dosiervorrichtung 5 werden dann wählbare Gewichtsmengen an Klärschlamm, mineralischem Rohstoff mit Tonmineralanteil und Füllstoff zusammengebracht. Vorzugsweise werden dosierte Anteile in der Abfolge mineralischer Rohstoff mit Tonmineralanteil, Füllstoff, Klärschlamm ausgegeben, und zwar bevorzugt unter Bildung eines Massebandes. Bei der Zugabe des Klärschlamms gelangt dieser in Kontakt mit dem Füllstoff, der gegebenenfalls die Feuchtigkeit des Klärschlamms teilweise aufnehmen kann.

Der in die Dosiervorrichtung 5 einbringbare Klärschlamm ist ein teilentwässerter Flüssigkeitsklärschlamm mit einem Trockensubstanzgehalt von mindestens 15 %, insbesondere 20 bis 30 %. Trockensubstanzgehalte von mehr als 60 % sind nachteilig und müssen gegebenenfalls durch Zusatz von Flüssigkeit verdünnt werden. Der Klärschlamm kann aerob und/oder anaerob stabilisiert sein und ist vorzugsweise ausgefault. Desweiteren kann der Klärschlamm durch zumindest kurzfristiges Erhitzen vorab hygienisiert worden sein.

Der Klärschlamm kann volumenmäßig in einem Mischungsverhältnis von bis zu 4 : 1 mit den Ausgangsrohstoffen, mineralischer Rohstoff und Füllstoff, zusammengebracht werden. Standard-Dosierungen liegen zwischen 2 - 3 : 1. Dosierte Anteile in Gew.-% liegen vorzugsweise bei 20 bis 50 Gew.-% Klärschlamm und 80 bis 50 Gew.-% Ausgangsrohstoffe (mineralischer Rohstoff und Füllstoff).

Dosierte Mengen an Klärschlamm, mineralischem Rohstoff und Füllstoff gelangen von der Dosiervorrichtung 5 auf Fördereinrichtungen 6, 7 zu einem Mischer 8, zum Beispiel einem Doppelmischer. Auf dem Weg von der Dosiervorrichtung 5 zum Mischer 8 kann eine Vormischung des zu mischenden Gutes aus den vorstehend genannten dosierten Anteilen durchgeführt werden.

Dem zu mischenden Gut wird für die Herstellung eines zumindest grob homogenen Gemenges aus dem Mischgut eine ausreichende Mischstrecke zur Verfügung gestellt. Die Dauer des Mischvorganges ist dabei derart zu wählen, daß ein weitgehender Kationenaustausch von Klärschlamm an die Tonmineralien erfolgt. Während des Mischens im Mischer 8 erfolgt die Bindung der Schadstoffe an die Tonminerale. Beim Mischen wird eine Homogenisierung des Mischgutes erreicht, die verbunden ist mit einer Mobilisierung der Tonminerale. Die Feuchtigkeit des Mischgutes, im wesentlichen festgelegt durch die Teilentwässerung des Klärschlamms und dessen Dosierung in bezug auf ersten und zweiten Versatzanteil, ist vorzugsweise derart, daß ein lockeres, krümeliges und pelletartiges Gemenge erhalten wird. Die Struktur des Gemenges ist steuerbar, da unterschiedliche Wassergehalte im Klärschlamm durch Zugabe von mehr oder weniger großen Anteilen eines Grob- und Feinanteils an quellfähigem Ton ausgeglichen werden können.

Das erhaltene krümelige, zumindest grob homogene Gemenge kann in einen Vorratsbehälter A gefördert werden, wozu teilweise schwenkbare Fördereinrichtungen 9, 10 genutzt werden. Dort oder nach überführung in eine Rotte wird das erhaltene Gemenge zur Kompostierung einer aeroben Umsetzung überlassen. Vorzugsweise wird das Gemenge während einer statischen aeroben Umsetzung zeitweilig durchgemischt. Bereits nach wenigen Tagen, beispielsweise einer Woche, ist das erhaltene Gemenge zu einem humusähnlichen Produkt abgebaut, das als Bodenverbesserungsmittel oder Düngerersatz ausgebracht werden kann.

Eine weitere Reduzierung des Gefahrenpotentials kann durch eine Hygienisierung des Mischgutes durch zumindest kurzfristiges Erhitzen erzielt werden. Im Klärschlamm enthaltene Bakterien werden so abgetötet. Für ein solches kurzfristiges Erhitzen kann der Mischer 8 für eine direkte oder indirekte Erwärmung des Mischgutes ausgebildet sein. Beispielsweise kann der Mischer 8 eine Einrichtung zum Erwärmen des Mischgutes mittels eines elektromagnetischen Wechselfeldes aufweisen oder selbst als eine Aufheizeinrichtung ausgebildet sein. Der Mischer 8 umfaßt dazu vorzugsweise einen geschlossenen Abschnitt.

Zur Erhöhung der Durchsatzmenge der Anlage kann ein entsprechend aufgebauter zweiter Anlagen-Aufbereitungsarm mit Dosiervorrichtung 18, Mischer 21 sowie dazwischenlaufenden Fördereinrichtungen 19, 20, 22, 24 hinter der Zerkleinerungsvorrichtung 1 abzweigen.

Das anhand der Anlage beschriebene Verfahren zum Bearbeiten von Klärschlamm läßt sich wie folgt zusammenfassen:
Klärschlamm wird ein mineralischer Rohstoff mit einem Tonmineralanteil und ein Zuschlagstoff zugegeben. Dieses, gegebenenfalls vorgemischte, zu mischende Gut, gelangt in einen Mischer 8. Die Zugabemenge an Klärschlamm wird dabei u.a. beeinflußt vom Flüssigkeitsgehalt des Klärschlamms, der über eine Anpassung des quellfähigen Tonmineralanteils des mineralischen Rohstoffs und/oder über den Zuschlagstoff ausgleichbar ist, aber auch genügend Flüssigkeit für eine Umformung in eine bildsame Masse bereitstellen kann. Andererseits bedingt der Zuschlagstoff eine Lockerung der Textur des vom Mischer 8 zu verarbeitenden Mischgutes.

Während des Mischens erfolgt die Adsorption der Schadstoffe durch die Tonminerale. Die Adsorption der Schadstoffe durch Dreischichttonminerale oder durch diagenetisch verfestigte Kaolinittone erfolgt relativ schnell, so daß kurze Mischzeiten von weniger als 30 Minuten realisierbar sind. Optimiert wird der Mischvorgang durch die vom Füllstoff hervorgerufene Lockertextur des Gemisches.

Das erhaltene, zumindest grob homogenisierte Gemenge wird einer aeroben Umsetzung überlassen, wobei aufgrund der guten Kompostiereigenschaften des erhaltenen Gemenges ein schneller Abbau erfolgt.

Dieses Verfahren ermöglicht den Einsatz von Zweischichttonmineralien, insbesondere Kaolinittone, die wegen ihrer mangelnden Adsorptionsfähigkeit für eine wirksame Bindung von Schadstoffen bisher als ungeeignet angesehen wurden.

Zur Abtötung von Bakterien in dem Gemenge, kann dieses während des Mischvorganges zumindest kurzfristig erhitzt werden.

Alternativ kann der Zuschlagstoff in erhitztem Zustand einem Vorgemisch aus Klärschlamm und mineralischem Rohstoff zugemischt werden, wobei dieser Rohstoffversatz dann zu dem zumindest grobhomogenen Gemenge gemischt wird.

## Patentansprüche

1. Verfahren zum Verarbeiten von Klärschlamm durch Mischen eines teilentwässerten, stabilisierten Klärschlamms mit einem mineralischen Rohstoff, dadurch gekennzeichnet, daß ein körniger, mineralischer Rohstoff verwendet wird, der einen Tonmineralanteil aufweist und der zusammen mit einem Textur auflockernden Zuschlagstoff und Klärschlamm zu einem zumindest grobhomogenen Gemenge gemischt wird, wobei die Dauer des Mischvorganges derart gewählt ist, daß ein weitgehender Kationenaustausch vom Klärschlamm an die Tonmineralien erfolgt und das erhaltene Gemenge zur Kompostierung einer aeroben Umsetzung überlassen wird.

2. Verfahren nach Anspruch 1, dadurch gekennzeichnet, daß der Zuschlagstoff ein leichter, sperriger Füllstoff ist.

3. Verfahren nach Anspruch 1 oder 2, dadurch gekennzeichnet, daß der Zuschlagstoff ein leichtes, feuchtigkeitsregulierendes, organisches Material, insbesondere Holzschnitzel oder Mulch, ist.

4. Verfahren nach Anspruch 1 oder 2, dadurch gekennzeichnet, daß der Zuschlagstoff von zumindest teilweise kalzinierten Tonmineralien oder von Scherben eines keramischen Altmaterials oder dergleichen gebildet wird.

5. Verfahren nach Anspruch 1, dadurch gekennzeichnet, daß der Zuschlagstoff von einem Grobkornanteil des körnigen, mineralischen Rohstoffs gebildet wird.

6. Verfahren nach Anspruch 5, dadurch gekennzeichnet, daß der Grobkornanteil Korngrößen ≧ 10 mm und ≦ 60 mm umfaßt.

7. Verfahren nach einem der Ansprüche 1 bis 6, dadurch gekennzeichnet, daß der Zuschlagstoff den mineralischen Rohstoff bis zu 50 Gew.-% substituiert.

8. Verfahren nach einem der Ansprüche 1 bis 7, dadurch gekennzeichnet, daß der mineralische Rohstoff eine Körnung mit einer kontinuierlichen oder diskontinuierlichen Korngrößenverteilung besitzt, wobei die Korngrößen hauptsächlich zwischen 1 µm und 10 mm liegen.

9. Verfahren nach einem der Ansprüche 1 bis 8, dadurch gekennzeichnet, daß der mineralische Rohstoff ein tonmineralischer Rohstoff ist mit einem Hauptbestand an Zweischichttonmineralien, deren Kationenaustauschkapazität aufgrund eines zumindest niedrigen Diagenesegrades erhöht ist.

10. Verfahren nach einem der Ansprüche 1 bis 8, dadurch gekennzeichnet, daß der mineralische Rohstoff ein Natursteingranulat ist und der Tonmineralanteil von einem oder mehreren Zwei- und/oder Dreischichttonmineralien gebildet wird.

11. Verfahren nach einem der Ansprüche 1 bis 10, dadurch gekennzeichnet, daß teilentwässerter Klärschlamm mit einem Trockengehalt von mindestens etwa 15 %, insbesondere von 20 bis 30 %, zugesetzt wird.

12. Verfahren nach einem der Ansprüche 1 bis 11, dadurch gekennzeichnet, daß der Klärschlamm volumenmäßig in einem Mischungsverhältnis von bis zu 4 : 1 dem mineralischen Rohstoff zugegeben wird.

13. Verfahren nach einem der Ansprüche 1 bis 12, dadurch gekennzeichnet, daß das Gemenge während der aeroben Umsetzung zeitweilig durchmischt wird.

14. Verfahren nach einem der Ansprüche 1 bis 13, dadurch gekennzeichnet, daß zum Abtöten von im Klärschlamm enthaltenen Bakterien der Zuschlag-stoff zumindest teilweise in erhitztem Zustand einem Vormischgut aus mineralischem Rohstoff und Klärschlamm zugemischt wird.

15. Verwendung eines nach dem Verfahren nach einem der Ansprüche 1 bis 14 erhaltenen Gutes als Austrag zu Dünge- und/oder Rekultivierungszwecken.
